# EUROPEAN PATENT APPLICATION

(11) **EP 1 840 409 A2**
(43) Date of publication of application: **03.10.2007**
(21) Application number: 07006607.1
(22) Date of filing: 29.03.2007
(51) Int. Cl.: F16G 5/18

(54) **Power transmission chain, and power transmission system**

(30) Priority: 31.03.2006 JP 2006096597
(71) Applicant: JTEKT Corporation, Osaka-shi Osaka 542-8502 (JP)
(72) Inventor: Kamamoto, Shigeo, Osaka-shi Osaka 542-8502 (JP); Tada, Seiji, Osaka-shi Osaka 542-8502 (JP); Kuster, Joel, Osaka-shi Osaka 542-8502 (JP)
(74) Representative: Schaeberle, Steffen

(57) **Abstract**

At the peripheral edge of a through hole (2a), in which one pin (3) or strip (4) in a link plate (2) is fixed, a compressive residual stress is applied selectively to vicinities of the outer corners of two upper and lower sides confronting in the chain radial direction of said one pin (3) or strip (4).

## Description

### BACKGROUND OF THE INVENTION

### 1. Field of the Invention

The present invention relates to a power transmission system such as a chain type continuously variable transmission system to be adopted in a vehicle or the like, and to a power transmission chain to be used in the power transmission system.

### 2. Related Art

A continuously variable transmission (CVT) of an automobile is exemplified to include an input pulley disposed on the engine side, an output pulley disposed on the drive wheel side, and an endless power transmission chain looped between the two pulleys. A known power transmission chain (as referred to JP-A-8-312725) includes a link plate having a pair of pin through holes, or through holes into which pins are inserted, and a plurality of first and second pin members, one of which is fixed in the through hole whereas the other is inserted in a rolling manner into the through hole, so that they can be bent by the first and second pin members are brought into rolling contact to each other relatively.

In case the power transmission chain of JP-A-8-312725 is to be manufactured, it is generally performed that the plural link plates are connected in a bendable manner by pin members, and that a pretension is applied to the endless loop chain thereby to apply a compressive residual stress to the link plates thereby to strengthen the link plates. If the excessive tensile load acts, when the pretension is applied, on the link plates so that the plastic deformation extends as wide as the portions needing no plastic deformation, there arises a problem that the durability of the chain cannot be sufficiently improved.

### SUMMARY OF THE INVENTION

The present invention has been conceived in view of such background, and has an object to provide a power transmission chain having a high durability and a power transmission system using the chain.

In order to achieve the aforementioned object, the invention takes the following technical means.

According to the invention, there is provided a power transmission chain comprising:
a plurality of overlapped link plates, each having a pair of through holes; and
a plurality of first and second pin members connecting said link plates to each other, of which one is fixed and another other is inserted in a rolling manner into said through holes, said first and second pin members being relatively rotatable in rolling contact with each other,
wherein a compressive residual stress is applied selectively to vicinities of outer corners of two upper and lower sides of said one pin member, which confront each other in a chain radial direction.

According to the invention, the compressive residual stress is applied selectively to the vicinities of those outer corners of the two upper and lower sides of the one pin member, which confront each other in the chain radial direction, so that the plastic deformation does not extend to the unnecessary portion so that the durability of the chain can be improved.

According to the invention, there is provided a power transmission system comprising a first pulley having a conical sheave face, a second pulley having a conical sheave face, and a power transmission chain looped between said first and second pulleys and contacting with the sheave faces of said first and second pulleys thereby to transmit a power between the two pulleys by a frictional force, characterized in that said power transmission chain is the aforementioned power transmission chain.

According to the invention, the aforementioned power transmission chain having the high durability is used so that the power transmission can be stably performed for a long time.

According to the power transmission chain of the invention, the compressive residual stress is applied selectively to the vicinities of those outer corners of the two upper and lower sides of the one pin member, which confront each other in the chain radial direction, so that the plastic deformation does not extend to the unnecessary portion so that the durability of the chain can be improved. Moreover, the power transmission system of the invention uses the aforementioned power transmission chain so that the power transmission can be stably performed for a long time.

### BRIEF DESCRIPTION OF THE DRAWINGS

Fig. 1 is a perspective view showing the state, in which a power transmission chain is looped between an input pulley and an output pulley.
Fig. 2 is a sectional view showing an essential construction, in which the power transmission chain is looped on the input pulley.
Fig. 3 is a perspective view schematically showing an essential construction of the chain.
Fig. 4 is a front elevation of a three-cylinder type preloading apparatus.
Fig. 5 is a front elevation of an essential portion of the three-cylinder type preloading apparatus.
Fig. 6 is a sectional view of the vicinity of an upper lower or a lower roller.
Fig. 7 shows FEM results of a link plate, to which a preload of 12 kN is applied.
Fig. 8 shows FEM results of a link plate, to which a preload of 16 kN is applied.
Fig. 9 shows FEM results of a link plate, to which a preload of 20 kN is applied.
Fig. 10 shows FEM results of a link plate, to which a preload of 24 kN is applied.

### DETAILED DESCRIPTION OF THE PREFERRED EMBODIMENTS

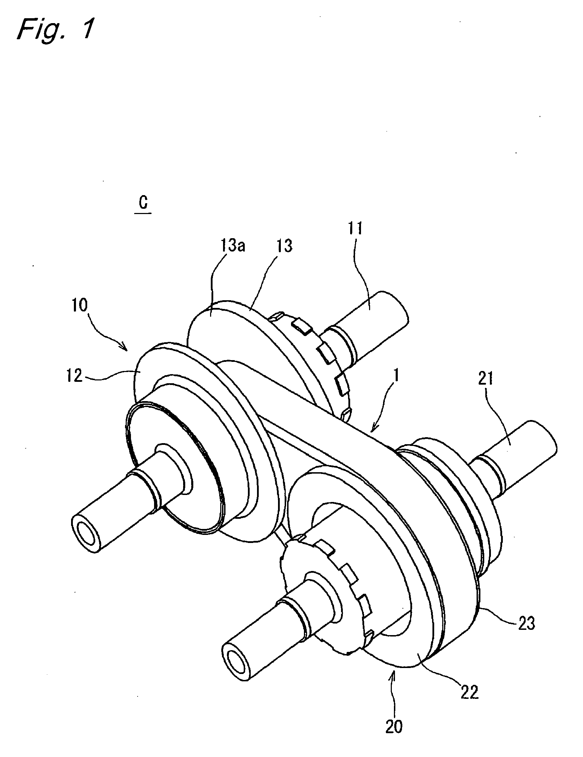

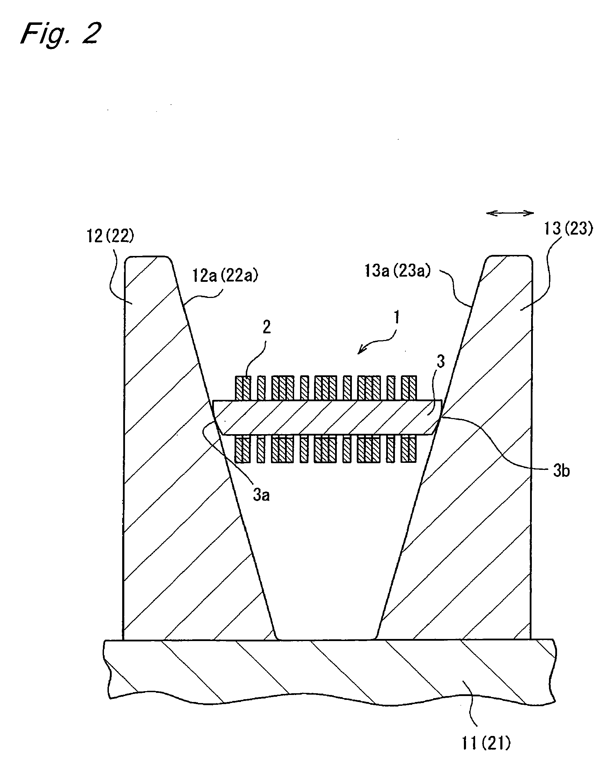

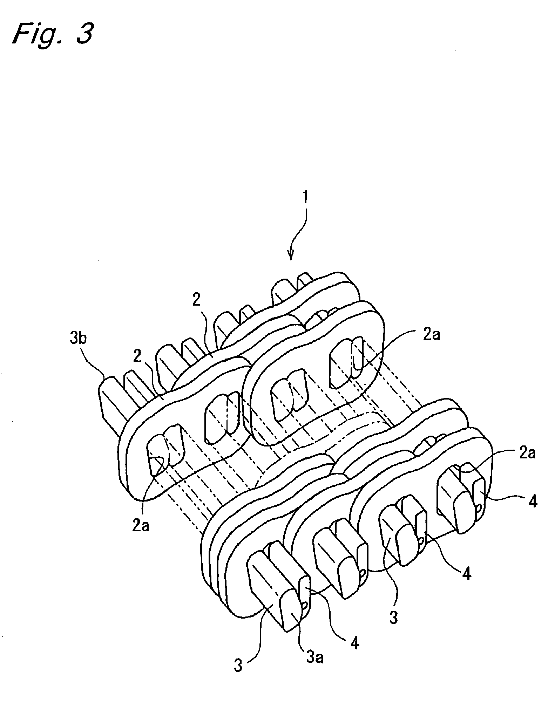

A mode of embodiment of the invention is described in the following with reference to the accompanying drawings. Fig. 1 and Fig. 2 show a chain type continuously variable transmission system C (as will also be shortly referred to as the "continuously variable transmission system") according to one mode of embodiment of a power transmission system of the invention, and Fig. 3 shows a power transmission chain 1 (as will also be shortly referred to as the "chain") to be used in that continuously variable transmission system C. This continuously variable transmission system C according to this mode of embodiment is mounted on an automobile, for example, and is equipped with an input pulley 10 made of a metal (e.g., structural steel) as a first pulley, an output pulley 20 made of a metal (e.g., structural steel) as a second pulley, and the aforementioned power transmission chain 1 looped between the input pulley 10 and the output pulley 20.

The input pulley 10 is so mounted on an input shaft 11 connected to the engine side as to rotate integrally therewith, and is equipped with a stationary sheave 12 having a conical sheave face 12a and a moving sheave 13 having a conical sheave face 13a arranged to confront the sheave face 12a. These sheave faces 12a and 13a form a V-shaped groove, by which the chain 1 is clamped and held by a strong pressure. To the moving sheave 13, on the other hand, there is connected the hydraulic actuator (although not shown) for changing the groove width. At a speed changing time, the moving sheave 13 is moved to vary the groove width so that the chain 1 can be moved to vary the winding radius of the chain 1 relative to the input shaft 11.

On the other hand, the output pulley 20 is so mounted on an output shaft 21 connected to the drive wheel side as to rotate integrally therewith, and is equipped, like the input pulley 10, with a stationary sheave 23 and a moving sheave 22 having sheave faces for forming a groove to clamp the chain 1 by a strong pressure. To the moving sheave 22 of this pulley 20, like the moving sheave 13 of the input pulley 10, there is connected the hydraulic actuator (although not shown). At a speed changing time, the moving sheave 13 is moved in its axial direction to vary the groove width so that the chain 1 can be moved to vary the winding radius of the chain 1 relative to the output shaft 21.

The continuously variable transmission system C thus constructed according to this mode of embodiment can change the speed continuously in the following manner. Specifically, in case the rotating speed of the output shaft 21 is to be decelerated, the groove width on the side of the input pulley 10 is enlarged by the movement of the moving sheave 13 to reduce the winding diameter of the chain 1 on the input shaft 11 while the pin end faces 3a and 3b of the chain 1 being held in sliding contact under a boundary lubricating condition toward the inner sides of the conical sheave faces 12a and 13a. On the side of the output pulley 20, on the other hand, the groove width is reduced by the movement of the moving sheave 22 to enlarge the winding diameter of the chain 1 on the output shaft 21 while the pin end faces 3a and 3b of the chain 1 being held in sliding contact under a boundary lubricating condition toward the outer sides of conical sheave faces 22a and 23a.

Thus, the rotation of the output shaft 21 can be decelerated. In case the rotating speed of the output shaft 21 is to be accelerated, on the other hand, the groove width on the side of the input pulley 10 is reduced by the movement of the moving sheave 13 to enlarge the winding diameter of the chain 1 on the input shaft 11 while the pin end faces 3a and 3b of the chain 1 being held in sliding contact under a boundary lubricating condition toward the outer sides of the conical sheave faces 12a and 13a. On the side of the output pulley 20, on the other hand, the groove width is enlarged by the movement of the moving sheave 22 to reduce the winding diameter of the chain 1 on the output shaft 21 while the pin end faces 3a and 3b of the chain 1 being held in sliding contact under a boundary lubricating condition toward the inner sides of conical sheave faces 22a and 23a. Thus, the rotation of the output shaft 21 can be accelerated.

The description is made on the chain 1 to be looped between the input pulley 10 and the output pulley 20. This chain 1 is constructed to include: a plurality of link plates 2 made of a metal (e.g., carbon steel) and acting as chain constructing members; a plurality of pins 3 made of a metal (e.g., bearing steel) and acting as first or second pin members for connecting those link plates 2 to each other; and strips 4 acting as first or second pin members slightly shorter than those pins 3. Here, the illustration of the widthwise center portion of the chain 1 is partially omitted from Fig. 1.

The link plates 2 are shaped to have a substantially identical gentle contour, and are individually provided with two through holes 2a. Each through hole 2a is shaped to combine two elliptical shapes, which are elongated in a direction perpendicular to the chain advancing direction. The pins 3 connecting those link plates 2 are rod members having side faces along the inner peripheries of the through holes 2a, and are all formed to have a substantially identical shape. The pin end faces 3a and 3b are formed into protruding curved faces set to have a predetermined curvature so that they contact with the two pulleys to transmit the power. The strips 4 are made slightly shorter than the pins, and are rod members which have side faces along the inner peripheries of the through holes 2a and which are all formed to have a substantially identical shape. Moreover, the plural link plates 2 are arranged in an overlapped manner, and are connected to each other in a bendable manner by inserting the pins 3 and the strips 4 into the through holes 2a of the link plates 2 arranged to overlap each other.

The pin 3 and the strip 4 are so inserted into one through hole 2a that one of them is press-fitted in the through hole 2a whereas the other is rotatably inserted while making rolling contact with the side face of one. Moreover, the other is press-fitted in the through hole 2a of one link plate 2 overlapping and adjoining to another link plate 2. Moreover, said one is rotatably inserted into the through hole 2a of said another link plate 2. Of the pin 3 and the strip 4, one is press-fitted in the through hole 2a whereas the other is rotatably inserted into the through hole 2a, so that the link plates 2 are connected in the bendable manner to each other. Thus, the bendable chain 1 is constructed by connecting the overlapped link plates 2 in the bendable manner and by arranging the overlapped link plates 2 in a chain width direction perpendicular to the chain advancing direction.

In order to strengthen the individual link plates 2 composing the chain 1, the necessary portions of the individual link plates 2 are plastically deformed to apply the compressive residual stresses. In the manufacturing process, therefore, the pins 3 and the strips 4 are inserted into the through holes 2a to connect the link plates 2 in the bendable manner to each other thereby to obtain an endless loop chain 1p, and this endless loop chain 1p is pretensed. A pretensing apparatus for applying the pretension is described in the following.

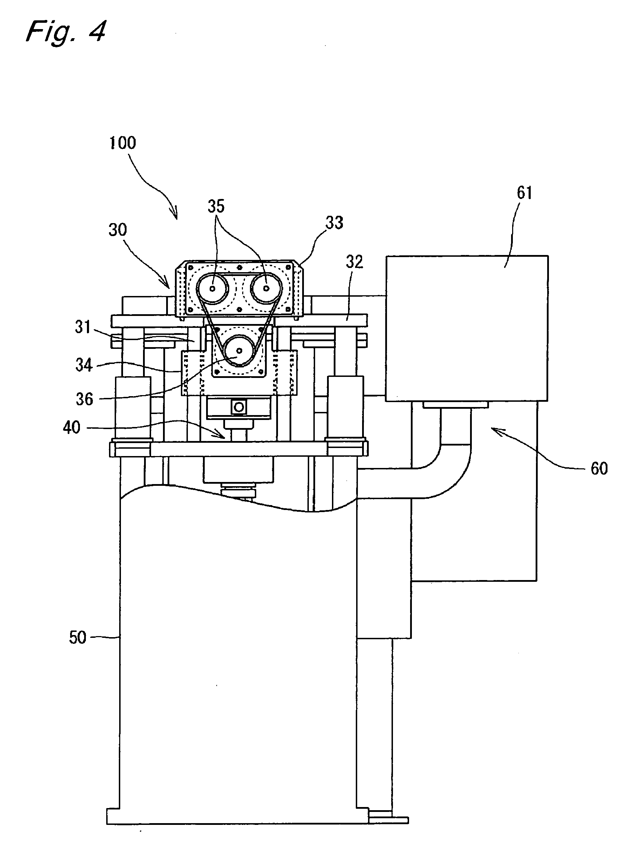

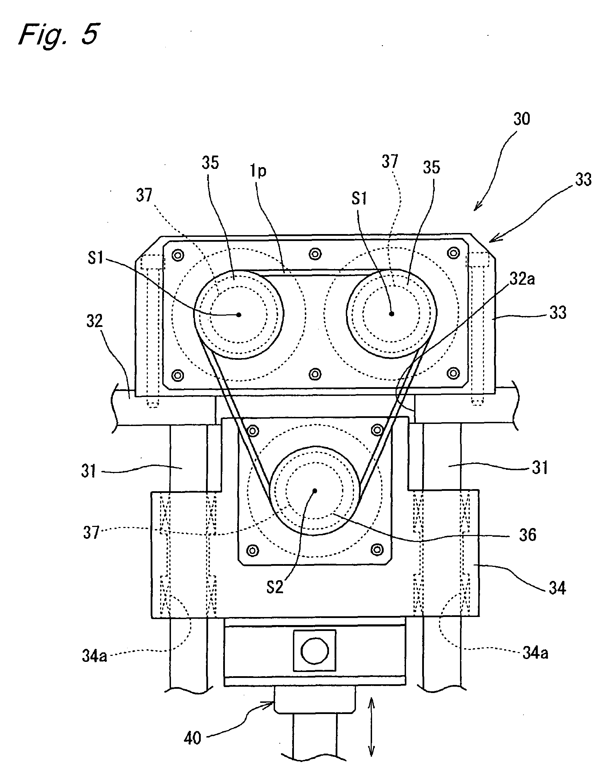

Fig. 4 shows a preloading apparatus 100 acting as the pretension applying apparatus for applying the pretension to the chain 1p. This apparatus 100 is equipped with an apparatus body 30, an hydraulic device 40 positioned on the lower side of the apparatus body 30, a platform 50; and a control device 60 arranged on the side of the apparatus body 30. As shown in Fig. 5, the apparatus body 30 is equipped with: guide posts 31 erected from the two right and left sides of the platform 50; a stationary support plate 32 mounted on the upper ends of the guide posts 31; a stationary portion 33 fixed on the stationary support plate 32; a lifting unit 34 positioned below the stationary portion 33; two upper rollers 35 mounted on the stationary portion 33; and a lower roller 36 mounted on the lifting unit 34. The two upper rollers 35 are supported at the same level positions, and the lower roller 36 is so supported at such a lower position as corresponds to the central portion between the two upper rollers 35. These upper rollers 35 and lower roller 36 are so arranged that the chain 1p looped between the rollers 35 and 36 forms a triangular shape in a front view.

In the two right and left sides of the lifting unit 34, moreover, there are individually formed through holes 34a, into which the aforementioned guide posts 31 are inserted, so that the lifting unit 34 can vertically move close to and apart from the stationary portion 33. As a result, the lifting unit 34 is moved upward and downward (i.e., into and out of the aforementioned triangle) by the hydraulic device 40 disposed below the lifting unit 34, so that the distances between the individual upper rollers 35 disposed on the stationary unit 33 and the lower roller 36 carried on the lifting unit 34 vary. Here in the central portion of the stationary support plate 32, there is formed an inlet port 32a, into which the upper portion of the lifting unit 34 proceeds as lifting unit 34 rises.

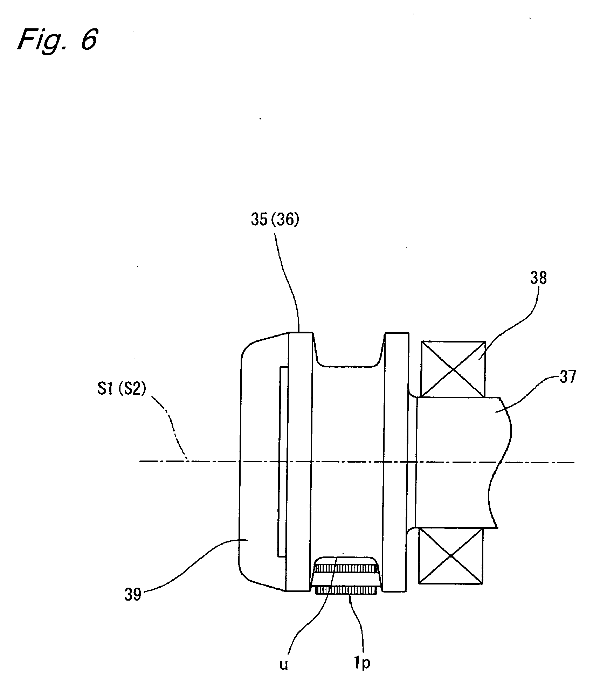

Moreover, the upper rollers 35 and the lower roller 36 are individually formed integrally with the leading end of a support shaft 37, as shown in Fig. 6. These support shafts 37 are rotatably supported individually by bearings 38 in the stationary portion 33 and in the lifting unit 34. As a result, the upper rollers 35 and the lower roller 36 are so supported in a cantilever state as can rotate on their individual axes s1 and s2. Moreover, the stationary portion 33 is equipped with the not-shown roller drive units, by which the upper rollers 35 are rotated. At the leading ends of the upper rollers 35 and the lower roller 36, moreover, there are mounted guide caps 39 for mounting the chain 1p easily. The control device 60 controls the hydraulic device 40 and the roller drive unit to move the lower roller 36 upward and downward and to rotate the upper rollers 35. Each of the upper rollers 35 and the lower roller 36 is equipped with a U-shaped groove u for running the chain 1p. This chain 1p is looped in the individual grooves u of the upper rollers 35 and the lower roller 36. When the lower roller 36 is moved downward in this state, a tensile load is applied to the chain 1p.

Here is specifically described a method for pretensing the chain 1 by using the preloading apparatus 100 thus far described. At first, the lower roller 36 is lifted together with the lifting unit 34, and the chain 1p is fitted in and looped between the grooves u of the two upper rollers 35 and the lower roller 36. Then, the lower roller 36 is lowered to tense the chain 1p. Next, the upper rollers 35 are rotated, and the lower roller 36 is further lowered by a predetermined distance from the upper rollers 35. The chain 1p is loaded with a tensile load while being endlessly turned. Here, the chain 1p is endlessly turned by several turns at a peripheral speed for an ordinary use, in which the speed or the rollers take 1,000 rpm. The number of turns of the chain 1p is 7 or less, preferably 1.

When the turns of the chain 1p are ended, the rotations of the upper rollers 35 are stopped, and the lower roller 36 is lifted together with the lifting unit 34. The chain 1 is removed from the individual rollers 35 and 36 so that the preloaded chain 1 is obtained. By this pretension applying method at a slower peripheral speed and at a smaller turning number than those of the prior art, plastic deformations are reliably caused exclusively at those portions in the peripheral edge portions of the through holes 2a of the link plate 2, to which a high force is applied from the fixed pins 3 or strips 4, so that compressive residual stresses are applied to those portions.

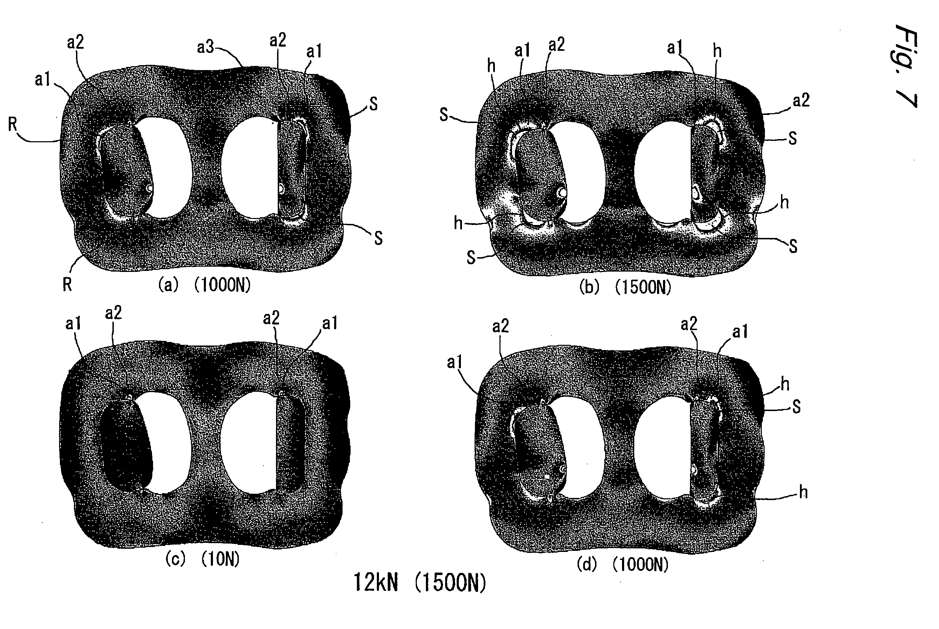

Fig. 7 to Fig. 10 present the results of the finite element method (FEM) analyses of the stress distributions of the link plates 2 at the time when the pretension was applied to the chain 1p. These FEM analyses are obtained in case the tensile load was applied again up to 1,000 N(r) while imaging the practical use, after the individual pretensions of 12 kN, 16 kN, 20 kN and 24 kN were applied and then once released. Here, the maximum tensile load to be applied to the link plates were 1,500 N for a pretension of 12 kN, 2,000 N for 16 kN, 2,500 N for 20 kN, and 3,000 N for 24kN. In the following the description is made as 1,500 N(r), in case the tensile load of 1,500 N was applied to the link plates. In the individual Figures: (a) shows the time of 1, 000 N(r) in the procedure where a specified pretension was applied; (b) shows the time when the specified pretension was applied; (c) shows the time of 10 N(r) when the tensile load was applied again; and (d) shows the time of 1,000 N(r).

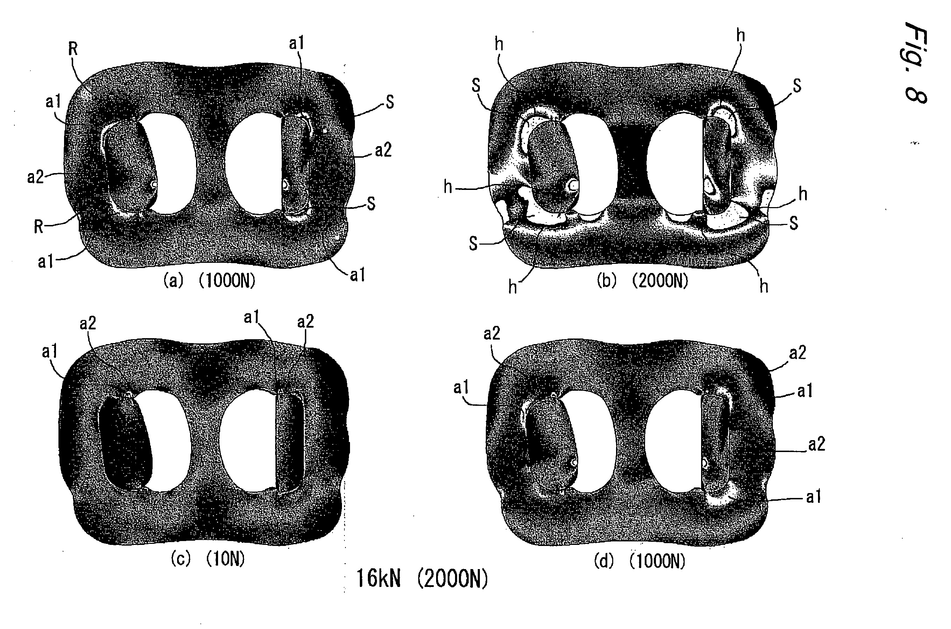

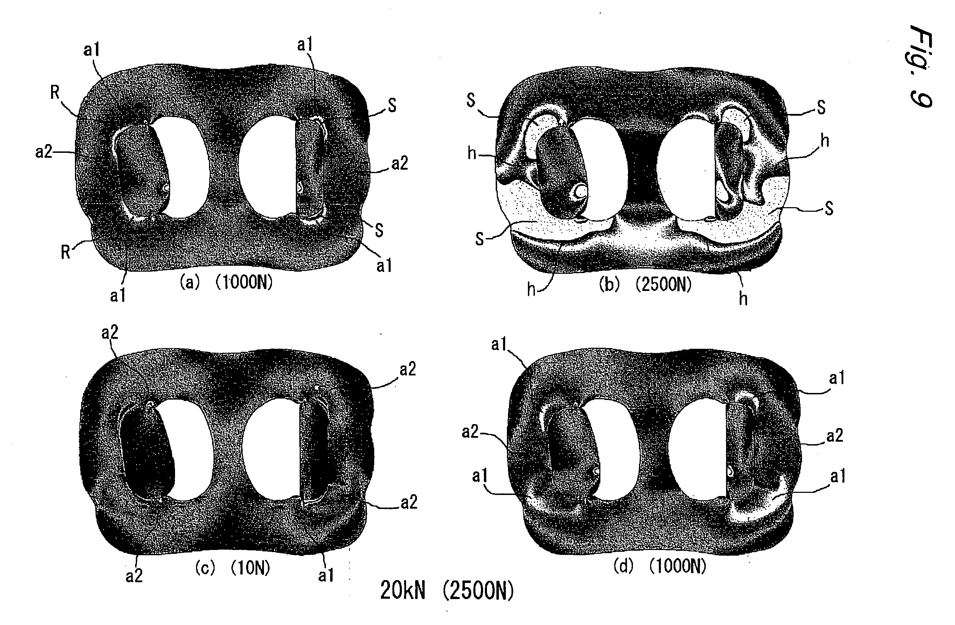

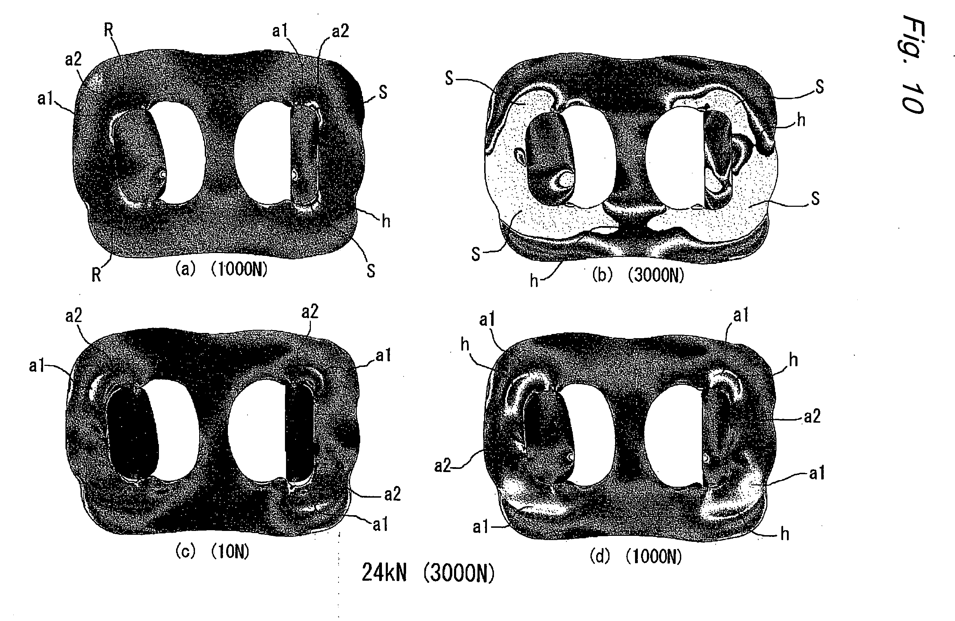

From (a) and (b) of the individual Figures, it is understood that a high force by the pretension is applied in the peripheral edges of the through holes having the pin members (e.g., the pins 3 or the strips 4) fixed, and in the vicinity of the outer corners R of the through holes on the two upper and lower sides confronting in the chain radial direction of one pin member (e.g., the pin 3 or the strip 4). In the Figures: the plastically deformed portions are designated by s; the tensile stress portions by h; the portions of the higher and lower stress values in the compressive stress portions by a1 and a2. As seen from (b) of the individual Figures, the plastic stress portions s are especially concentrated near the through hole outer corners R. As the pretension becomes higher 12 kN, 16 kN, - - -, and so on, the plastic deformation portions s extend. Especially in Fig. 9 and Fig. 10, the plastic deformation portions s widely extend. In view of (c) of the individual Figures, at the time of 10 N(r) when the tensile load was applied again, the compressive stress portion a2 is small in Fig. 7 and Fig. 8, and the compressive stress portion a2 extends wider in Fig. 9 and Fig. 10 in the procedure where the tensile load was applied again.

The vicinities of the through hole outer corners R are compared at (a) and (d) in the individual Figures. As described above, (a) shows the time of the pretension, and (d) shows the time of 1,000 (r) when the tension was applied again. The variation of the plastic deformation portions s is hardly recognized between (a) and (d) of Fig. 7. The plastic deformation portion s exists in Fig. 8(a) between Fig. 8(a) and Fig. 8(d), but the plastic deformation portion is small or hardly exists in Fig. 8(b). Comparing (a) and (d) of Fig. 9 and Fig. 10, it is recognized in (d) of the individual Figures that the plastic deformation portion s become smaller, but that the tensile stress portion h and the compressive stress portions a1 and a2 become larger.

From the aforementioned analytical results, the plastic deformation portions s are concentrated near the through hole outer corners R, to which the compressive residual stress is applied. At the repeated tension loading time supposing the practical use, the plastic deformation portions s are shrunken till the pretension becomes 16 kN. When the pretension exceeds 20 kN, the tensile stress portions h and the compressive stress portion a2 extend, and it is understood that the pretension is preferably to be set to 12 kN to 16 kN. Therefore, the lower roller 36 is so moved downward from the upper rollers 35 that the pretension may be 12 kN to 16 kN, and the tensile load is applied to the chain 1p while the chain 1p being endlessly turned. Moreover, both the peripheral speed and the peripheral turns of the chain are suppressed so that the plastic deformation does not extend to the portions other than the vicinities of the through hole outer corners R.

According to the chain 1 of the mode of embodiment thus far described, the vicinities of the through hole outer corners R, against which the pins 3 and the strips 4 on the press-fitted and fixed sides abut, are plastically deformed to establish the compressive residual stresses. More specifically, the vicinities, at which the strongest force is applied, of the link plates 2 are especially strengthened to establish the so-called "shake-down state", in which the metallic fatigue is prevented as a result of a rise in the deformation resistance. Moreover, the plastic deformation in the link plates 2 does not extend to the unnecessary portions so that the durability of the chain 1 can be improved.

Moreover, the power transmission system C of the mode of embodiment thus far described employs the aforementioned power transmission chain 1 having an improved durability and a stabilized quality so that it can perform the power transmission stably for a long time. Here, the power transmission system of the invention should not be limited to the mode, in which the groove widths of both the input pulley and the output pulley fluctuate, but may be exemplified by the mode, in which only one groove width is fluctuated whereas the other is fixed unfluctuant. In the foregoing mode, the groove width is continuously fluctuated, but the invention can also be applied to another power transmission system, in which the groove width is stepwise fluctuated or fixed. Moreover, the pin members constituting the chain may also be composed of pin bodies and contact members disposed on the two end portions of the pin bodies. The chain may also be of the block type having block members for clamping the overlapped link plates.

## Claims

1. A power transmission chain comprising:
a plurality of overlapped link plates, each having a pair of through holes; and
a plurality of first and second pin members connecting said link plates to each other, of which one is fixed and another other is inserted in a rolling manner into said through holes, said first and second pin members being relatively rotatable in rolling contact with each other,
wherein a compressive residual stress is applied selectively to vicinities of outer corners of two upper and lower sides of said one pin member, which confront each other in a chain radial direction.

2. The power transmission chain according to claim 1, wherein a pair of the first and second pin members are inserted into one through hole such that the first pin is press-fitted in said through hole and the second pin is rotatably inserted with rolling contact with a side face of said first pin.

3. A power transmission system comprising:
a first pulley having a conical sheave face, a second pulley having a conical sheave face, and a power transmission chain looped between said first and second pulleys and contacting with the sheave faces of said first and second pulleys thereby to transmit a power between the two pulleys by a frictional force,
wherein said power transmission chain is one according to claim 1.
